# FASCICULE DE BREVET EUROPEEN

(11) **EP 1 931 911 B1**
(45) Date de publication et mention de la délivrance du brevet: **27.07.2011**
(21) Numéro de dépôt: 06794512.1
(22) Date de dépôt: 31.07.2006
(51) Int. Cl.: F17C 5/06, F17C 13/02

(54) **PRODEDE ET DISPOSITIF DE REMPLISSAGE D'UN GAZ SOUS PRESSION DANS UN RESERVOIR**
VERFAHREN UND VORRICHTUNG ZUR TANKFÜLLUNG MIT DRUCKGAS
METHOD AND DEVICE FOR FILLING A TANK WITH A PRESSURISED GAS

(30) Priorité: 28.09.2005 FR 0552911
(43) Date de publication de la demande: 18.06.2008
(73) Titulaire: L'AIR LIQUIDE, Société Anonyme pour l'Etude et l'Exploitation des Procédés Georges Claude, 75007 Paris (FR)
(72) Inventeur: ALLIDIERES, Laurent, F-38410 Uriage les Bains (FR)
(74) Mandataire: De Cuenca, Emmanuel Jaime
(86) Numéro de dépôt international: PCT/FR2006/050767
(87) Numéro de publication internationale: WO 2007/036651

(56) Documents cités:
- EP-A- 1 500 864
- US-A- 5 832 906
- US-A1- 2003 021 743
- US-A1- 2005 000 802
- US-A1- 2005 016 185

## Description

La présente invention concerne un procédé et un dispositif de remplissage d'un gaz sous pression dans un réservoir, notamment de l'hydrogène dans le réservoir d'un véhicule.

L'invention concerne plus particulièrement le remplissage d'un gaz sous pression dans un réservoir comprenant une étape de compression du gaz provenant d'une première source de gaz pour remplir le réservoir directement ou via au moins un contenant tampon, l'étape de compression étant réalisée par l'utilisation de l'énergie d'un fluide de travail. Un remplissage utilisant un contenant tampon est divulgué dans le document US5832906.

Le remplissage de réservoirs par du gaz sous pression est sujet à de nombreuses contraintes industrielles, en particulier, lorsque les gaz doivent être stockés à des pressions élevées (par exemple 500 bar ou 700 bar ou au-delà).

Le stockage de l'hydrogène gazeux à des pressions élevées est particulièrement important pour son utilisation dans des véhicules automobiles. De plus, dans cette application notamment, la relative rapidité du remplissage de réservoir est un facteur important. En effet, le remplissage de réservoirs hydrogène à bord de véhicules comportant une pile à combustible ou un moteur à combustion interne fonctionnant à l'hydrogène doit pouvoir être effectué au plus en quelques minutes. Le remplissage doit être contrôlé avec soin car une pressurisation rapide du gaz induit un échauffement qui peut devenir incompatible avec le matériau constituant le réservoir.

Pour résoudre ce problème, une solution connue consiste à prévoir une installation de production de froid au niveau de la station de remplissage. Cette solution nécessite des infrastructures lourdes et coûteuses en énergie électrique notamment. Une autre solution consiste à contrôler la vitesse de remplissage en fonction de la température du gaz dans le réservoir. Cette solution a cependant l'inconvénient d'allonger la durée du remplissage du réservoir.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce qu'il comporte une étape d'échange thermique entre le gaz comprimé et le fluide de travail.

Par ailleurs, l'invention peut comporter l'une ou plusieurs des caractéristiques suivantes :
- l'étape d'échange thermique est réalisée avec du fluide de travail avant son utilisation pour comprimer le gaz et / ou avec du fluide de travail qui n'est pas utilisé pour comprimer le gaz,
- l'étape d'échange thermique entre le gaz comprimé et le fluide de travail est réalisée de façon indirecte via un vecteur ou accumulateur de frigories,
- le procédé comporte une étape de remplissage intermédiaire consistant à comprimer le gaz provenant de la première source et à alimenter au moins un contenant tampon avec ledit gaz comprimé et en ce qu'il comporte une étape d'échange thermique intermédiaire entre le fluide de travail et le vecteur ou accumulateur de calories, l'étape d'échange thermique intermédiaire étant réalisée pendant ou dans un intervalle de temps proche de l'étape de remplissage intermédiaire.
- le procédé comporte une étape de remplissage du réservoir à partir d'au moins un contenant tampon et en ce qu'il comporte une étape d'échange thermique entre le vecteur ou accumulateur de calories et le gaz sous pression après sa sortie du contenant et avant son entrée dans le réservoir.

L'invention concerne également un dispositif de remplissage d'un gaz sous pression dans un réservoir, notamment de l'hydrogène dans le réservoir d'un véhicule, de mise en oeuvre du procédé selon l'une quelconque des caractéristiques précédentes comprenant au moins une source de gaz à une première pression, des moyens de compression actionnés par un fluide de travail aptes à comprimer du gaz provenant notamment de la première source de gaz, une source de fluide de travail pour alimenter et commander les moyens de compression du gaz, caractérisé en ce qu'il comprend des moyens d'échange thermique aptes à réaliser un échange thermique entre le gaz comprimé et le fluide de travail.

Selon d'autres particularités :
- un contenant tampon apte d'une part à être alimenté en gaz comprimé par les moyens de compression et, d'autre part à alimenter en gaz comprimé un réservoir, le dispositif comportant des moyens de raccordement destinés à être raccordés à un réservoir pour délivrer au réservoir du gaz comprimé provenant sélectivement soit directement des moyens de compression ou soit d'un contenant tampon et en ce que les moyens d'échange thermique sont disposés en amont des moyens de raccordement, de façon à être alimenté en gaz comprimé provenant des moyens de compression ou d'un contenant tampon,
- les moyens d'échange thermique sont aptes à réaliser un échange thermique indirect entre le gaz comprimé et le fluide de travail, via vecteur ou accumulateur de frigories,
- les moyens d'échange thermique comportent un échangeur de chaleur comprenant un accumulateur de frigories tel que de l'eau glycolée ou de l'aluminium,
- les moyens de compression sont du type pneumatique dans lesquels le fluide de travail est à l'état gazeux, le fluide de travail étant stocké dans la source sous forme liquéfiée et en ce qu'il comprend des moyens de réchauffement aptes réchauffer le fluide de travail à sa sortie de la source au-dessus de sa température d'ébullition avant d'être délivré aux moyens de compression,
- les moyens de réchauffement du fluide de travail à sa sortie de la source comportent les moyens d'échange thermique aptes à réaliser un échange thermique entre le gaz comprimé et le fluide de travail,
- les moyens de réchauffement du fluide de travail à sa sortie de la source comportent les moyens d'échange thermique additionnels aptes à réaliser un échange thermique entre le fluide de travail et un fluide plus chaud, par exemple l'air,
- les moyens de réchauffement du fluide de travail à sa sortie de la source comportent les moyens d'échange thermique additionnels disposés en série avec les moyens d'échange thermique gaz comprimé/fluide de travail,
- le dispositif comporte des moyens d'acheminement du fluide de travail depuis sa source jusqu'aux moyens de compression du gaz, les moyens d'acheminement comprenant des moyens de dérivation sélectifs aptes à faire transiter le fluide de travail à sa sortie de la source sélectivement via les moyens d'échange thermique gaz comprimé/fluide de travail et/ou via les moyens d'échange thermique additionnels,
- la source de gaz à une première pression comprend un système de stockage et/ou de génération de gaz disposé sur une station fixe ou mobile,
- le dispositif comporte au moins deux contenants tampon destinés à stocker le gaz comprimé à deux pressions distinctes.

D'autres particularités et avantages apparaîtront à la lecture de la description ci-après, faite en référence aux figures dans lesquelles :
- la figure 1 représente une vue schématique illustrant la structure et le fonctionnement d'un exemple de dispositif de remplissage selon l'invention,
- les figures 2 à 7 illustrent schématiquement respectivement six étapes d'un exemple d'utilisation du dispositif de remplissage de la figure 1.

Le dispositif comprend trois réservoirs ou contenants 1, 2, 3 de gaz. Un premier contenant 1 est par exemple une réserve d'hydrogène en bouteilles à une pression de 200 bar (ou 300 bar ou autre) servant d'approvisionnement en hydrogène. Le premier contenant 1 est par exemple une source principale d'hydrogène destinée à alimenter des réservoirs 11, 12. Par exemple, le premier contenant 1 est un réservoir destiné à être rempli en hydrogène sur un lieu de production. Bien entendu, le premier contenant 1 peut être fixe et / ou associé à une unité de production d'hydrogène fixe ou mobile de type électrolyseur ou procédé de réformage du gaz naturel.

Les second 2 et troisième 3 contenants sont par exemples des réservoirs ou ensembles de bouteilles tampons utilisés lors de remplissages avec des phases classiques d'équilibrage par cascade. Par exemple, le second 2 peut être destiné à stocker l'hydrogène à une pression de 450 bar environ tandis que troisième 3 contenant stocke l'hydrogène à une pression de 850 bar environ.

La sortie de chaque contenant 1, 2, 3 est raccordée à une mise à l'air de sécurité respective 21, 22, 23 aptes à permettre l'évacuation du gaz vers l'atmosphère. La sortie de chaque contenant 1, 2, 3 comporte des moyens capteurs de pression respectifs 31, 32, 33.

La sortie du premier contenant 1 (source d'hydrogène) est raccordée par une ligne 101 à un compresseur 6 pour alimenter ce dernier en gaz destiné à être comprimé. La ligne 101 d'alimentation du compresseur 6 en gaz comporte trois vannes 41, 51, 61 disposées en série. Un capteur 26 de pression est également prévu pour mesurer la pression du gaz à l'entrée du compresseur 6.

La ligne 101 d'alimentation du compresseur 6 en gaz comporte une première ligne 201 de dérivation qui raccorde directement le premier contenant 1 avec la ligne de sortie 36 du compresseur (c'est-à-dire la ligne 36 qui contient le gaz pressurisé dans le compresseur 6). La première ligne 201 de dérivation est raccordée sur la ligne 101 d'alimentation entre les seconde 51 et troisième vannes 61 en série et comporte une mise à l'air de sécurité 202.

Les sorties des deuxième 2 et troisième contenant 3 tampon sont raccordées chacune à la première ligne 201 de dérivation via une vanne 52, 53 respective. Une première vanne 203 est disposée sur la première ligne 201 de dérivation entre le raccord à la ligne d'alimentation 101 et le raccord du second contenant 2 tampon. Une seconde vanne 204 est disposée sur la première ligne 201 de dérivation entre le raccord du troisième contenant 2 tampon et le raccord de la ligne d'alimentation 101 à la ligne de sortie 36 du compresseur 6.

La ligne de sortie 36 du compresseur 6 comporte des moyens 96 capteurs de pression du gaz à la sortie du compresseur 6. La ligne de sortie 36 du compresseur traverse ensuite un échangeur de chaleur 9 décrit plus en détail ci-après qui permet de refroidir le gaz comprimé avant son entrée dans un réservoir 11,12. En aval de l'échangeur 9, la ligne de sortie 36 du compresseur est pourvue de moyens 106 capteurs de température du gaz comprimé et d'un filtre à particule 46. En aval du filtre 46, la ligne 36 de sortie est subdivisée en deux lignes 13, 14 parallèles aptes chacune à être raccordée à un réservoir 11, 12 respectif d'un véhicule, pour délivrer audit réservoir du gaz comprimé (hydrogène) provenant sélectivement soit directement des moyens 6 de compression ou soit d'un contenant tampon 2, 3. En variante, l'installation peut ne comporter qu'une ligne 13 ou 14 de raccordement, par exemple si la station ne permet le remplissage qu'à une seule pression préférentielle.

Chaque ligne 13, 14 de raccordement comporte respectivement, d'amont en aval (l'aval étant le réservoir 11, 12 à remplir), une première vanne 131, 141, puis un orifice calibré tel qu'une vanne pointeau manuelle ou pilotée 132, 142, un capteur de pression 133, 143. Chaque ligne 13, 14 de raccordement comporte ensuite un double dispositif de mise à l'air 134, 144 (une mise à l'air automatique de sécurité et une mise à l'air via une vanne). Les dispositifs de mise à l'air permettent en cas de besoin de faire échapper le gaz (hydrogène) hors du circuit, par exemple vers l'atmosphère.

En aval du double dispositif de mise à l'air 134, 144, chaque ligne 13, 14 comporte une vanne d'arrêt d'urgence 135, 145 et enfin un système 136, 146 apte à être accouplé à des moyens de réception sur un réservoir (par exemple un flexible 136, 146 terminé par un raccord de connexion rapide qui peut se connecter sur un orifice d'entrée du réservoir 11, 12). Chaque ligne 13, 14 de raccordement peut être dimensionnée pour délivrer du gaz à une pression déterminée (par exemple respectivement 700 bar et 350 bar).

Le compresseur 6 est de préférence pneumatique et apte à réaliser une surpression jusqu'à 1300 bar (de préférence 850 bar au minimum). Le compresseur 6 est alimenté classiquement en gaz de travail qui fournit l'énergie de compression via une ligne d'amenée 116 dont l'extrémité amont est reliée une source 40 de gaz de travail. Le gaz de travail assure par exemple les déplacements d'un ou plusieurs pistons dans le corps du compresseur 6.

Le gaz 4 de travail est de préférence de l'azote stocké sous forme refroidie au sein de la source 40. De préférence, l'azote est stocké sous forme liquide (azote cryogénique) dans le réservoir source 40. L'azote liquide 4 est prélevé de son réservoir source 40 au moyen, par exemple, d'une canne de plongée ou analogue. A la sortie de la source 40 d'azote, la ligne d'amenée 116 comporte une portion à deux lignes 7, 8 parallèles.

Une première 8 ligne comporte un premier 9 échangeur de chaleur. La seconde 7 ligne court-circuite le premier 9 échangeur de chaleur et rejoint la première ligne 8 en amont d'un second échangeur 16 de chaleur.

Le premier 9 et le second 16 échangeurs en série dans la première ligne 8 sont destinés à réchauffer le fluide à la sortie de la source 40 en vue d'obtenir du gaz. Un dispositif 18 permettant une mise à l'air du gaz de travail via, par exemple, une vanne est prévu en aval des deux échangeurs 9, 16.

La séparation du gaz entre la première ligne 8 et la seconde ligne 7 se fait au moyen, par exemple, d'une vanne trois voies 56. En aval du second échangeur 16, la ligne d'amenée 116 comprend des moyens 66 capteurs de température du gaz de travail qui transite vers le compresseur 6 et deux vannes en série 76, 86 destinées respectivement à couper l'arrivée de gaz de travail vers le compresseur 6 (donc à arrêter le compresseur) et à régler le débit de gaz de travail (donc à régler le débit de compression).

Le premier échangeur 9 de la première ligne 8 constitue l'échangeur 9 situé sur la ligne 36 de sortie du compresseur 6. C'est-à-dire que le premier échangeur 9 permet un échange thermique entre le fluide de travail 4 (azote) et le gaz comprimé à la sortie du compresseur 6 ou en sortie des contenants 1, 2 ou 3. De cette façon, le premier échangeur 9 permet de refroidir le gaz comprimé en créant un échange thermique avec le fluide de travail qui est plus froid. Typiquement, la température du gaz comprimé à la sortie du compresseur 6 est de l'ordre de 120°C. La température du gaz à la sortie des contenants 1, 2, ou 3 est approximativement égale à la température ambiante tandis que la température du fluide de travail à la sortie de la source est de l'ordre de -196°C.

Cet échange thermique entre le fluide de travail et le gaz comprimé peut notamment assurer le réchauffage du fluide 4 de travail à la sortie de la source 4 en vue de son évaporation ou refroidir une capacité frigorifique 5 de l'échangeur 9 consituée, par exemple, d'une masse d'aluminium ou/et d'eau glycolée.

De préférence, le premier échangeur 9 réalise l'échange thermique entre le gaz comprimé et le fluide 4 de travail de façon indirect, c'est-à-dire via vecteur ou accumulateur de frigories (ou accumulateur de froid). Par exemple, l'échangeur 9 peut comporter à cet effet un accumulateur de frigories 5 tel que de l'eau glycolée, une masse d'aluminium, ou tout autre moyen équivalent. L'accumulateur de frigories 5 est de préférence dimensionné de façon que sa température soit sensiblement uniforme pendant la durée d'au moins un remplissage d'un réservoir 11, 12.

L'échangeur 9 peut comporter avantageusement des capteurs 19 de températures des fluides et/ou de l'accumulateur 5 de froid au sein de l'échangeur 9.

Le second échangeur 16 de la seconde ligne 9 est destiné également à compléter le réchauffement du fluide à la sortie de la source 40 en vue d'obtenir du gaz, par exemple par échange thermique avec l'air extérieur, afin de pouvoir être utilisé dans le compresseur 6 en tant que fluide de travail.

Ainsi, la commande appropriée des vannes 56, 18 de la ligne d'amenée 116 permet de répartir sélectivement le fluide à la sortie de la source 40 pour le réchauffer dans l'échangeur 16 de la première ligne afin d'être utilisé en fluide de travail du compresseur et réchauffé éventuellement également dans l'échangeur 9, afin de conditionner en température l'accumulateur de frigories 5. De même, ces vannes 56, 18 permettent de contrôler la proportion de gaz réchauffé dans cette ligne 116 qui est envoyé vers le compresseur 6 et/ou vers l'extérieur (via le dispositif 18 de mise à l'air). De cette façon, le dispositif permet de réguler la puissance thermique de l'échangeur 9 fluide 4 de travail /gaz compressé ainsi que le réchauffement dudit fluide 4 de travail en vue de son utilisation dans le compresseur 6, et ce de manière indépendante.

De préférence, le refroidissement du gaz compressé est dimensionné pour maintenir sa température entre -45°C et la température ambiante

De cette façon le fluide de travail (azote dans cet exemple de réalisation) est utilisé pour refroidir le gaz (hydrogène dans cet exemple) et ce même gaz réchauffé peut être utilisé pour faire fonctionner au moins un compresseur 6.

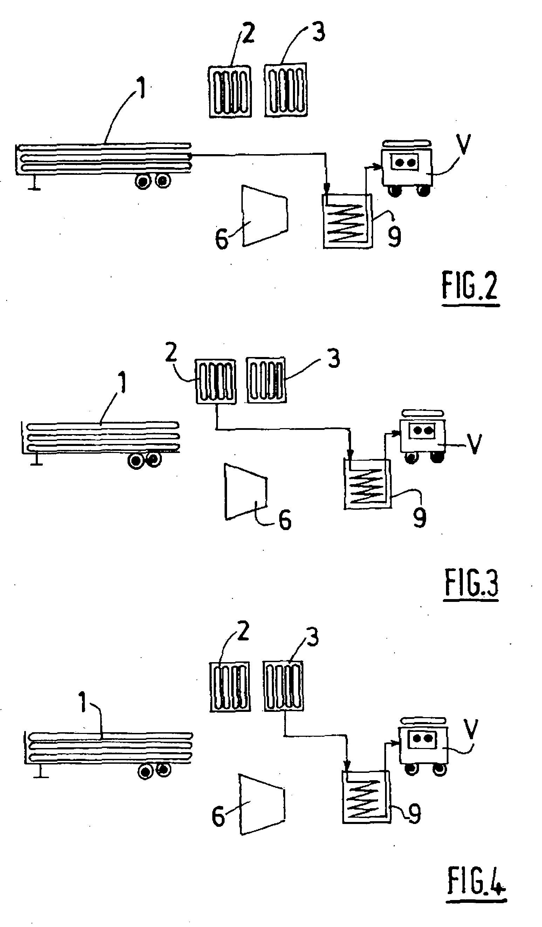

Comme décrit plus en détail ci-après en référence aux figures 2 à 7, le transfert de frigories du fluide de travail dans l'échangeur 9 est réalisé préférentiellement pendant une phase de remplissage d'un contenant 2, 3.

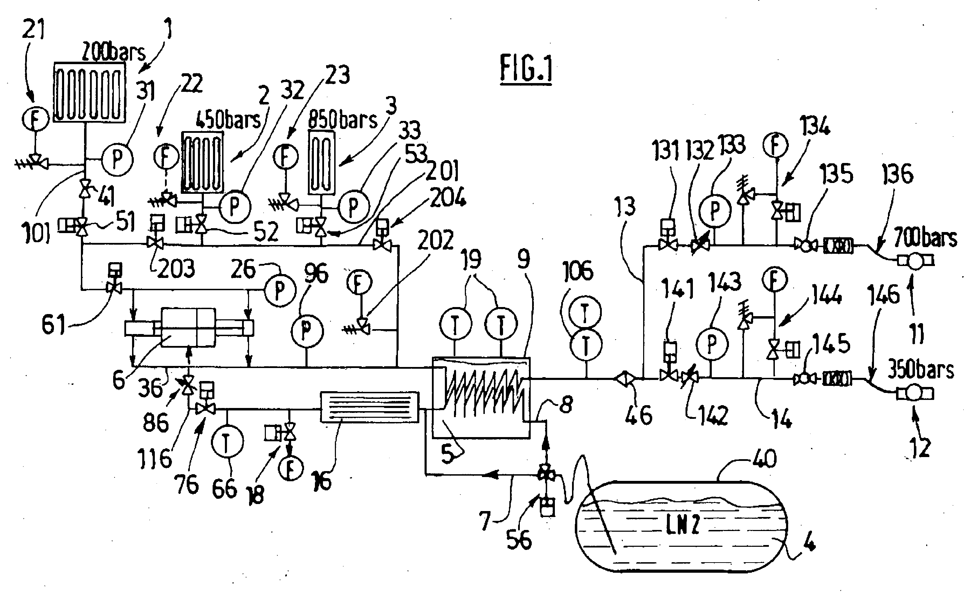

Par soucis de simplification, dans les figures 2 à 7, une partie seulement des éléments constitutifs du dispositif de la figure 1 ont été représentés. Les éléments identiques à ceux décrits ci-dessus en référence à la figure 1 sont désignés par les mêmes références numériques et ne sont pas décrits en détail une seconde fois.

Par ailleurs, le premier contenant 1 est représenté sous la forme d'une réserve d'hydrogène sur une station mobile (telle qu'une semi-remorque par exemple).

La figure 2 représente une étape A dans laquelle le réservoir d'un véhicule V est alimenté, par équilibrage de pression, en gaz (hydrogène) stocké dans le premier contenant 1 (par exemple à une pression de 200 bar).

Lors d'une l'étape B (figure 3), par exemple après équilibrage de l'étape A, le réservoir du véhicule V est alimenté, par équilibrage de pression, en gaz stocké dans le second contenant 2 (par exemple à une pression de 450 à 480 bar).

Lors d'une l'étape C (figure 4), par exemple après équilibrage de l'étape B, le réservoir du véhicule V est alimenté, par équilibrage de pression, en gaz gaz stocké dans le troisième contenant 3 (par exemple à une pression de l'ordre de 850 bar).

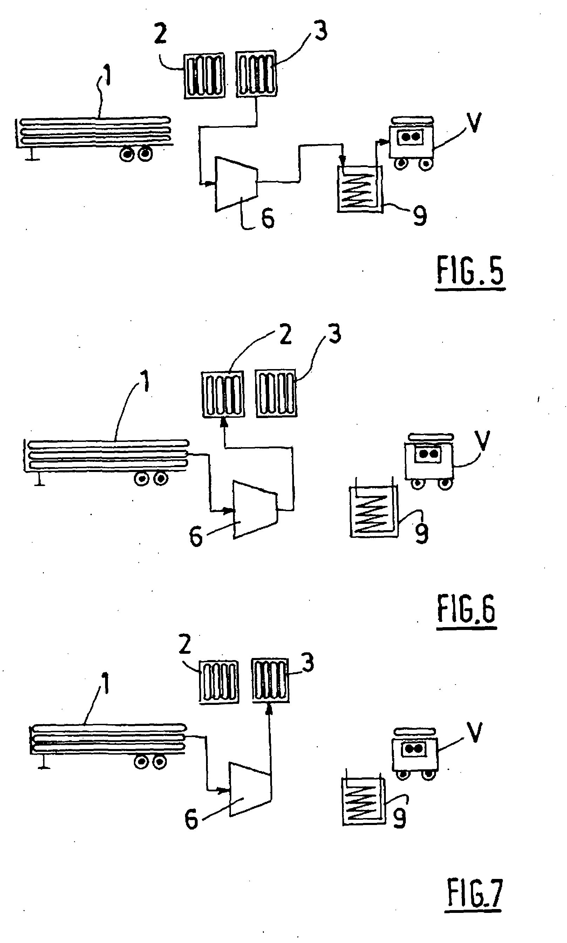

Lors d'une l'étape D (figure 5), un complément de remplissage peut être réalisé, par exemple après équilibrage de l'étape C, en alimentant le réservoir du véhicule V en gaz comprimé issu directement du compresseur 6 à une pression déterminée. Lors de ce complément de remplissage facultatif, le compresseur 6 peut être alimenté en gaz provenant du troisième contenant.

Comme représenté aux figures 2 à 7, lors de toutes ou partie des étapes A à E, le gaz compressé peut-être refroidi dans l'échangeur 9 hydrogène/fluide de travail avant son entrée sans le réservoir du véhicule V.

Lors d'une l'étape E (figure 6), le second contenant 2 peut être re-conditionné en gaz par le compresseur 6 à partir de gaz provenant du premier contenant 1.

Lors d'une l'étape F (figure 7), le troisième contenant 3 peut également être re-conditionné en gaz par le compresseur 6 à partir de gaz provenant du premier contenant 1.

De préférence pendant les étapes E et F, l'azote cryogénique (fluide de travail) est utilisé pour refroidir l'accumulateur 5 de frigories (bain d'eau glycolé ou aluminium) de l'échangeur 9. L'accumulateur 5 est par exemple isolé à une température comprise entre -45°C et la température ambiante. Après son évaporation l'azote peut être utilisé pour servir de fluide de travail (ou fluide moteur) au compresseur 6. Le fluide 4 de travail a ainsi une fonction frigorifique et vecteur d'énergie.

Lors des étapes A à D, l'hydrogène compressé circule dans l'échangeur 9 qui est refroidi.

L'échangeur 9 peut donc être refroidi :
- préalablement lors des étapes E et F tel que décrit ci-dessus,
- ou simultanément à la circulation du gaz comprimé en son sein (étapes A à D), par l'ouverture de la vanne du dispositif 18 de mise à l'air du gaz de travail de seconde ligne 8 de la ligne d'amenée 116,
- ou préalablement et simultanément (étapes A à F).

On conçoit donc aisément que tout en étant de structure simple, l'invention présente de nombreux avantages. En effet, l'énergie de compression du gaz et de refroidissement est apportée par le même fluide. De plus, selon l'invention il n'est pas nécessaire de prévoir un groupe de génération de froid fonctionnant à l'électricité, l'apport d'énergie électrique de forte puissance peut ainsi être évité. Le dispositif selon l'invention a par ailleurs l'accumulateur 5 de une grande compacité.

La source 1 d'approvisionnement en hydrogène peut aussi être une source basse pression de type électrolyseur et/ou réformeur. Dans ce cas, l'étape A et la vanne 203 ne sont pas nécessaires.

## Revendications

1. Procédé de remplissage d'un gaz sous pression dans un réservoir (11, 12), notamment de l'hydrogène dans le réservoir d'un véhicule, comprenant une étape de compression du gaz provenant d'une première source (1) de gaz pour remplir le réservoir directement ou via au moins un contenant tampon (2, 3), et une étape d'échange thermique **caractérisé en ce que** l'étape de compression est réalisée par l'utitisation de l'énergie d'un fluide (4) de travail, et **en ce que** l'étape d'échange thermique est effectuée entre le gaz comprimé et le fluide (4) de travail.

2. Procédé selon la revendication 1, **caractérisé en ce que** l'étape d'échange thermique est réalisée avec du fluide (4) de travail avant son utilisation pour comprimer le gaz et/ou avec du fluide (4) de travail qui n'est pas utilisé pour comprimer le gaz.

3. Procédé selon la revendication 1 ou 2, **caractérisé en ce que** l'étape d'échange thermique entre le gaz comprimé et le fluide (4) de travail est réalisée de façon indirecte via un vecteur ou accumulateur de frigories (5).

4. Procédé selon la revendication 3, **caractérisé en ce qu'**il comporte une étape de remplissage intermédiaire consistant à comprimer le gaz provenant de la première source (1) et à alimenter au moins un contenant tampon (2, 3) avec ledit gaz comprimé et **en ce qu'**il comporte une étape d'échange thermique intermédiaire entre le fluide (4) de travail et le vecteur ou accumulateur de calories (5), l'étape d'échange thermique intermédiaire étant réalisée pendant ou dans un intervalle de temps proche de l'étape de remplissage intermédiaire.

5. Procédé selon la revendication 4, **caractérisé en ce qu'**il comporte une étape de remplissage du réservoir à partir d'au moins un contenant tampon (2, 3) et **en ce qu'**il comporte une étape d'échange thermique entre le vecteur ou accumulateur de calories (5) et le gaz sous pression après sa sortie du contenant (2, 3) et avant son entrée dans le réservoir (11, 12).

6. Dispositif de remplissage d'un gaz sous pression dans un réservoir, notamment de l'hydrogène dans le réservoir d'un véhicule, de mise en oeuvre du procédé selon l'une quelconque des revendications précédentes comprenant au moins une source (1) de gaz à une première pression, des moyens (6) de compression actionnées par un fluide (4) de travail aptes à comprimer du gaz provenant notamment de la première source (1) de gaz, **caractérisé en ce qu'**il comprend une source (40) de fluide (4) de travail pour alimenter et commander les moyens (6) de compression du gaz, et des moyens (9, 5) d'échange thermique aptes à réaliser un échange thermique entre le gaz comprimé et le fluide (4) de travail.

7. Dispositif de remplissage selon la revendication 6, **caractérisé en ce qu'**il comporte au moins un contenant tampon (2, 3) apte d'une part à être alimenté en gaz comprimé par les moyens (6) de compression et, d'autre part à alimenter en gaz comprimé un réservoir (11, 12), le dispositif comportant des moyens (13, 14) de raccordement destinés à être raccordés à un réservoir (11, 12) pour délivrer au réservoir du gaz comprimé provenant sélectivement soit directement des moyens (6) de compression ou soit d'un contenant tampon (2, 3) et **en ce que** les moyens (9, 5) d'échange thermique sont disposés en amont des moyens (13, 14) de raccordement, de façon à être alimenté en gaz comprimé provenant des moyens (6) de compression ou d'un contenant tampon (2, 3).

8. Dispositif de remplissage selon l'une quelconque des revendications 6 ou 7, **caractérisé en ce que** les moyens (9, 5) d'échange thermique sont aptes à réaliser un échange thermique indirect entre le gaz comprimé et le fluide (4) de travail, via vecteur ou accumulateur de frigories (5).

9. Dispositif de remplissage selon la revendication 7, **caractérisé en ce que** les moyens (9, 5) d'échange thermique comportent un échangeur de chaleur comprenant un accumulateur de frigories (5) tel que de l'eau glycolée ou de l'aluminium.

10. Dispositif de remplissage selon l'une quelconque des revendications 6 à 9, **caractérisé en ce que** les moyens (6) de compression sont du type pneumatique dans lesquels le fluide (4) de travail est à l'état gazeux, le fluide (4) de travail étant stocké dans la source (40) sous forme liquéfiée et **en ce qu'**il comprend des moyens (15, 16, 9) de réchauffement aptes réchauffer le fluide (4) de travail à sa sortie de la source (40) au-dessus de sa température d'ébullition avant d'être délivré aux moyens (6) de compression.

## Claims

1. Method for filling a tank (11, 12) with a pressurized gas, particularly for filling the fuel tank of a vehicle with hydrogen, comprising a step of compressing the gas originating from a first gas source (1) to fill the tank directly or via at least one buffer vessel (2, 3), and a heat exchange step, **characterized in that** the compression step is performed by using the energy of a working fluid (4) and **in that** the step of heat exchange is performed between the compressed gas and the working fluid (4).

2. Method according to Claim 1, **characterized in that** the heat exchange step is performed using working fluid (4) before it is used to compress the gas and/or working fluid (4) which is not used to compress the gas.

3. Method according to Claim 1 or 2, **characterized in that** the step of heat exchange between the compressed gas and the working fluid (4) is performed indirectly via a carrier or a cold accumulator (5).

4. Method according to Claim 3, **characterized in that** it comprises an intermediate filling step which consists in compressing the gas originating from the first source (1) and in supplying at least one buffer vessel (2, 3) with. said compressed gas, and **in that** it comprises an intermediate step of heat exchange between the working fluid (4) and the carrier or heat accumulator (5), the intermediate heat exchange step being performed during or over a space of time close to the intermediate filling step.

5. Method according to Claim 4, **characterized in that** it comprises a step of filling the tank from at least one buffer vessel (2, 3) and **in that** it comprises a step of heat exchange between the carrier or heat accumulator (5) and the pressurized gas after it has left the vessel (2, 3) and before it enters the tank (11, 12).

6. Device for filling a tank with a pressurized gas, particularly for filling a vehicle fuel tank with hydrogen, for implementing the method according to any one of the preceding claims, comprising at least one source (1) of gas at a first pressure, compression means (6) actuated by a working fluid (4) and able to compress the gas originating in particular from the first gas source (1), **characterized in that** it comprises a source (40) of working fluid (4) for supplying and controlling the gas compression means (6) and heat exchange means (9, 5) able to perform heat exchange between the compressed gas and the working fluid (4).

7. Filling device according to Claim 6, **characterized in that** it comprises at least one buffer vessel (2, 3) able, on the one hand, to be supplied with compressed gas by the compression means (6) and, on the other hand to supply a tank (11, 12) with compressed gas, the device comprising connection means (13, 14) intended to be connected to a tank (11, 12) so as to deliver to the tank compressed gas originating selectively either directly from the compression means (6) or from a buffer vessel (2, 3), and **in that** the heat exchange means (9, 5) are positioned upstream of the connection means (13, 14) so that they can be supplied with compressed gas originating from the compression means (6) or from a buffer vessel (2, 3).

8. Filling device according to either one of Claims 6 and 7, **characterized in that** the heat exchange means (9, 5) are able to perform indirect heat exchange between the compressed gas and the working fluid (4) via a carrier or cold accumulator (5).

9. Filling device according to Claim 7, **characterized in that** the heat exchange means (9, 5) comprise a heat exchanger comprising a cold accumulator (5) such as glycol water or aluminum.

10. Filling device according to any one of Claims 6 to 9, **characterized in that** the compression means (6) are of the pneumatic type in which the working fluid (4) is in the gaseous state, the working fluid (4) being stored in the source (40) in liquefied form, and **in that** it comprises heating means (15, 16, 9), able to heat the working fluid (4) as it leaves the source (40) to above its boiling point before delivering it to the compression means (6).

## Patentansprüche

1. Verfahren zum Füllen eines mit Druck beaufschlagten Gases in einen Vorratsbehälter (11, 12), insbesondere von Wasserstoff in den Vorratsbehälter eines Fahrzeugs, das einen Schritt des Komprimierens des Gases, das von einer ersten Gasquelle (1) stammt, um den Vorratsbehälter direkt oder über wenigstens einen Pufferbehälter (2, 3) zu befüllen, und einen Wärmeaustauschschritt umfasst, **dadurch gekennzeichnet, dass** der Kompressionsschritt unter Verwendung der Energie eines Arbeitsfluids (4) ausgeführt wird und dass der Wärmeaustauschschritt zwischen dem komprimierten Gas und dem Arbeitsfluid (4) erfolgt.

2. Verfahren nach Anspruch 1, **dadurch gekennzeichnet, dass** der Wärmeaustauschschritt mit einem Arbeitsfluid (4) vor dessen Verwendung für die Kompression des Gases und/oder mit dem Arbeitsfluid (4), das nicht für die Kompression des Gases verwendet wird, ausgeführt wird.

3. Verfahren nach Anspruch 1 oder 2, **dadurch gekennzeichnet, dass** der Wärmeaustauschschritt zwischen dem komprimierten Gas und dem Arbeitsfluid (4) indirekt über einen Kühlmittelträger oder -akkumulator (5) ausgeführt wird.

4. Verfahren nach Anspruch 3, **dadurch gekennzeichnet, dass** es einen Schritt des Zwischenbefüllens umfasst, der darin besteht, das von der ersten Quelle (1) stammende Gas zu komprimieren und wenigstens einen Pufferbehälter (2, 3) mit dem komprimierten Gas zu versorgen, und dass es einen Zwischenwärmeaustauschschritt zwischen dem Arbeitsfluid (4) und dem Wärmeträger oder -akkumulator (5) umfasst, wobei der Zwischenwärmeaustauschschritt während eines Zeitintervalls oder in einem Zeitintervall in der Nähe des Zwischenbefüllungsschrittes ausgeführt wird.

5. Verfahren nach Anspruch 4, **dadurch gekennzeichnet, dass** es einen Schritt des Befüllens des Vorratsbehälters ausgehend von wenigstens einem Pufferbehälter (2, 3) umfasst und dass es einen Wärmeaustauschschritt zwischen dem Wärmeträger oder -akkumulator (5) und dem mit Druck beaufschlagten Gas nach dessen Verlassen des Behälters (2, 3) und vor dessen Eintritt in den Vorratsbehälter (11, 12) umfasst.

6. Vorrichtung zum Füllen eines mit Druck beaufschlagten Gases in einen Vorratsbehälter, insbesondere von Wasserstoff in den Vorratsbehälter eines Fahrzeugs, für die Ausführung des Verfahrens nach einem der vorhergehenden Ansprüche, die wenigstens eine Quelle (1) für Gas auf einem ersten Druck und Kompressionsmittel (6), die durch ein Arbeitsfluid betätigt werden und insbesondere das von der ersten Gasquelle (1) stammende Gas komprimieren können, umfasst, **dadurch gekennzeichnet, dass** sie eine Quelle (40) für Arbeitsfluid (4) umfasst, um die Mittel (6) für die Kompression des Gases zu versorgen und zu steuern, und Wärmeaustauschmittel (9, 5), die dazu ausgelegt sind, einen Wärmeaustausch zwischen dem komprimierten Gas und dem Arbeitsfluid (4) auszuführen, umfasst.

7. Befüllungsvorrichtung nach Anspruch 6, **dadurch gekennzeichnet, dass** sie wenigstens einen Pufferbehälter (2, 3) umfasst, der dazu ausgelegt ist, einerseits mit komprimiertem Gas durch die Kompressionsmittel (6) versorgt zu werden, und andererseits einen Vorratsbehälter (11, 12) mit komprimiertem Gas zu versorgen, wobei die Vorrichtung Verbindungsmittel (13, 14) umfasst, die dazu bestimmt sind, mit einem Vorratsbehälter (11, 12) verbunden zu werden, um an den Vorratsbehälter komprimiertes Gas zu liefern, das wahlweise entweder direkt von den Kompressionsmittel (6) oder von einem Pufferbehälter (2, 3) stammt, und dass die Wärmeaustauschmittel (9, 5) stromaufseitig der Verbindungsmittel (13, 14) angeordnet sind, derart, dass sie mit komprimiertem Gas versorgt werden können, das von den Kompressionsmitteln (6) oder von einem Pufferbehälter (2, 3) stammt.

8. Befüllungsvorrichtung nach einem der Ansprüche 6 oder 7, **dadurch gekennzeichnet, dass** die Wärmeaustauschmittel (9, 5) dazu ausgelegt sind, einen indirekten Wärmeaustausch zwischen dem komprimierten Gas und dem Arbeitsfluid (4) über einen Kühlmittelträger oder -akkumulator (5) auszuführen.

9. Befüllungsvorrichtung nach Anspruch 7, **dadurch gekennzeichnet, dass** die Wärmeaustauschmittel (9, 5) einen Wärmetauscher umfassen, der einen Kühlmittelakkumulator (5) wie etwa Glycol enthaltendes Wasser oder Aluminium enthält.

10. Befüllungsvorrichtung nach einem der Ansprüche 6 bis 9, **dadurch gekennzeichnet, dass** die Kompressionsmittel (6) vom Drucklufttyp sind, in denen das Arbeitsfluid (4) in einem gasförmigen Zustand ist, wobei das Arbeitsfluid (4) in der Quelle (40) in verflüssigter Form gespeichert ist, und dass sie Mittel (15, 16, 9) zum Wiedererwärmen umfasst, die dazu ausgelegt sind, das Arbeitsfluid (4) bei seinem Austritt aus der Quelle (40) erneut über seine Siedetemperatur zu erwärmen, bevor es zu den Kompressionsmitteln (6) geliefert wird.
